# EUROPÄISCHE PATENTSCHRIFT

(11) **EP 1 199 940 B1**
(45) Veröffentlichungstag und Bekanntmachung des Hinweises auf die Patenterteilung: **27.10.2004**
(21) Anmeldenummer: 00960388.7
(22) Anmeldetag: 03.08.2000
(51) Int. Cl.: A21C 11/16

(54) **DÜSENANORDNUNG, DÜSENTRÄGER UND VORRICHTUNG ZUM EXTRUDIEREN TEIGIGER MASSEN**
NOZZLE ARRANGEMENT, NOZZLE HOLDER AND DEVICE FOR EXTRUDING MATERIALS IN DOUGH FORM
ENSEMBLE FILIERE, PORTE-FILIERE ET DISPOSITIF POUR EXTRUDER DES MATIERES SOUS FORME DE PATE

(30) Priorität: 05.08.1999 DE 19936828
(43) Veröffentlichungstag der Anmeldung: 02.05.2002
(73) Patentinhaber: Hosokawa Bepex GmbH, 74211 Leingarten (DE)
(72) Erfinder: KAPPES, Holger, 74081 Heilbronn (DE); FUX, Günther, 74363 Güglingen (DE); ALTVATER, Frank, 74074 Heilbronn (DE)
(74) Vertreter: Goetz, Rupert, Dipl.-Ing.
(86) Internationale Anmeldenummer: PCT/EP2000/007553
(87) Internationale Veröffentlichungsnummer: WO 2001/010226

(56) Entgegenhaltungen:
- EP-A- 0 287 209
- EP-A- 0 434 983
- EP-A- 0 704 158
- WO-A-96/39039
- US-A- 2 532 131
- US-A- 4 574 690
- US-A- 4 859 165
- US-A- 4 900 572

## Beschreibung

Die Erfindung betrifft eine Düsenanordnung gemäß dem Oberbegriff des Anspruchs 1, einen Düsenträger gemäß dem Oberbegriff des Anspruchs 3 und eine Vorrichtung zum Extrudieren teigiger Massen mit einem derartigen Düsenträger.

Backwaren, Teige und Süßwaren werden oftmals extrudiert, indem unter Druck gesetzte Masse durch eine Düsenanordnung zu einem Strang ausgepreßt wird. Der Strang kann als solcher durch ein Transportband abgeführt oder in kurze Abschnitte geteilt werden. Die äußere Gestalt des Strangs, insbesondere seine Umfangsgestalt, ist von der Düsenanordnung abhängig.

Aus EP-A-0 704 158 ist eine Düsenanordnung mit einer inneren ortsfesten Düse bekannt, die von zwei in einem Rotor drehbar gelagerten äußeren Düsen umgeben ist. Die innere Düse erstreckt sich in Strömungsrichtung über die Mündung der äußeren Düse hinaus oder ist über deren Mündung hinaus durch ein mit dem Rotor mitdrehendes Rohr verlängert. Eine Verbindung der inneren Masse mit der äußeren Masse wird mit einer derartigen Düsenanordnung nur ungenügend gewährleistet.

Aus EP-A-0 168 255 und EP-A-0 177 175 sind Vorrichtungen zum Co-Extrudieren zweier Massen bekannt, die eine innere Masse durch eine Düse und eine äußere Masse mit darin enthaltenen körnigen Partikeln durch einen die Düse umgebenden Trichter extrudieren, wobei die Massen zu einem Strang verbunden werden. Der Trichter weist an seiner Mündung scharfe Kanten auf, um zu erreichen, daß die körnigen Partikel in der äußeren Masse an die Oberfläche gelangen. Die Mündung des Trichters kann gezahnt ausgebildet sein, damit die Partikel aus der Oberfläche hervorstehen. Der Verbundstrang wird von einem Tranportband abgeführt. Hierdurch läßt sich eine Backware aus zwei Massen herstellen, die geradlinige längliche Form hat und an der Oberfläche körnige Partikel aufweist.

US-A-5,120,554 beschreibt einen freistehenden Düsenkopf zum Extrudieren einer Teigmasse. Der Düsenkopf hat am Umfang mehrere Düsenanordnungen, die von je einer Zweifachdüse gebildet sind, um gefüllte Backwaren herzustellen. Diese Zweifachdüsen haben je eine innere Düse, die durch einen einzelnen Zuführkanal gespeist wird, und je eine äußere Düse. Die äußeren Düsen werden über eine gemeinsame zylinderförmige Zuführkammer durch seitliche Kanäle gespeist. Der Düsenkopf ermöglicht das gleichzeitige Extrudieren mehrerer gefüllter gerader Stränge.

Die US 2,532,131 offenbart eine Koextrusionsdüse mit einer ortsfest angebrachten äußeren Düse, die eine Mündung einer inneren Düse vollständig umschließt. Mittels dieser Düse können gerade Stränge eines von einem Hüllmaterial umschlossenen Lebensmittels hergestellt werden.

Aus US-A-5,518,749 und WO 97/25881 sind ein Verfahren und eine Vorrichtung zum Herstellen verdrillter Getreideprodukte bekannt. Ein Rotor, der sich durch eine Kammer erstreckt und in einer Öffnung der Kammer mündet, bildet eine innere Düse, durch die eine innere Masse zuführbar ist. Durch einen Seitenkanal ist eine zweite Masse in die Kammer zuführbar. Zwischen der Öffnung der Kammer und dem Rotor besteht ein Ringspalt, durch den die zweite Masse austreten kann. Der Ringspalt entspricht einer äußeren Düse. Dreht sich die innere Düse, so entsteht ein Erzeugnis mit einer verdrillten äußeren Masseschicht und einer Füllung. Dabei ist die Verdrillung der äußeren Masseschicht stark von den Eigenschaften der äußeren Masse, wie beispielsweise Fließverhalten und Zähigkeit, abhängig. Die extrudierten Getreideprodukte weisen daher nicht immer eine ausreichend gleichmäßige Form auf.

Aufgabe der Erfindung ist es, eine Düsenanordnung, einen Düsenträger und eine Vorrichtung zum Extrudieren teigiger Massen vorzusehen, mit denen verdrillte oder gewendelte Backwaren mit wenigstens einer äußeren Masse und mit wenigstens einer inneren Masse oder Füllung mit hoher Formgenauigkeit herstellbar sind.

Die Aufgabe ist erfindungsgemäß durch eine Düsenanordnung mit den Merkmalen des Anspruchs 1 gelöst. Demnach wird beim Extrudieren die Drehbewegung der äußeren Düse der Längsbewegung der extrudierten Masse in der inneren Düse überlagert, so daß eine äußerlich gewendelte Backware mit einer Füllung entsteht. Dabei strömen die Massen an der Mündung der inneren Düse zusammen. Erfindungsgemäß ist diese Mündung entgegen der Strömungsrichtung der Massen hinter der Mündung der äußeren Düse zurückversetzt. Die äußere Düse ist an ihrer Innenseite derart gestaltet, daß auf dem Weg von der Mündung der inneren Düse zur Mündung der äußeren Düse die innere Masse durch die äußere Masse mitgedreht und dabei komprimiert wird. Dadurch wird eine feste Bindung zwischen der inneren und der äußeren Masse erzielt. Bei den entstehenden Backwaren ist daher die Ankopplung der äußeren Masse auf der inneren Masse verbessert.

Durch die Gestaltung der Mündung der äußeren Düse gemäß Anspruch 2 tritt die Masse beim Extrudieren durch die im wesentlichen längsgerichteten Aussparungen, z.B. Längsnuten, aus und bildet an der Mantelfläche der zylinderförmigen Backware einen oder mehrere gewendelte Stege. Die Form und Anzahl dieses Steges oder dieser Stege läßt sich durch die Form und Anzahl der Aussparungen in einem weiten Rahmen variieren.

Vorteilhaft ist die Düsenanordnung in einem Düsenträger gemäß Anspruch 3 aufgenommen, der ferner gemäß den Ansprüchen 4 und 5 besonders einfach gestaltet sein kann.

Besonders geeignet zum Antreiben des genannten Düsenträgers ist gemäß Anspruch 6 ein Zugmittelgetriebe, insbesondere ein Zahnriementrieb, oder ein Zahnradgetriebe mit sich kreuzenden und dabei voneinander beabstandeten Achsen, wobei in einer besonderen Gestaltung gemäß Anspruch 7 mehrere Düsenträger gleichzeitig antreibbar sind.

Eine bevorzugte Ausführungsform der Erfindung sieht gemäß Anspruch 8 vor, daß der/die Düsenträger in einem Winkel α von etwa 25° zur Vertikalen geneigt angeordnet ist/sind. Durch den geneigten Düsenträger trifft die austretende Masse schräg auf eine Unterlage, beispielsweise ein Transportband, und wird dadurch beim wegbewegen weniger verformt, als dies der Fall wäre, wenn die Masse senkrecht austreten würde.

Ausführungsbeispiele einer erfindungsgemäßen Düsenanordnung, eines Düsenträgers und einer Vorrichtung zum Extrudieren teigiger Massen werden im folgenden anhand schematischer Zeichnungen näher erläutert. Es zeigt:
- Fig. 1: eine erste Ausführungsform eines erfindungsgemäßen Düsenträgers im Längsschnitt,
- Fig. 2: ein erstes Beispiel einer mit dem in Fig.1 dargestellten Düsenträger erzeugten Backware in Seitenansicht,
- Fig. 3: den Querschnitt III-III in Fig.2,
- Fig. 4: ein zweites Beispiel einer mit dem in Fig.1 dargestellten Düsenträger erzeugten Backware in Seitenansicht,
- Fig. 5: den Querschnitt V-V in Fig.4 und
- Fig. 6: eine zweite Ausführungsform eines erfindungsgemäßen Düsenträgers im Längsschnitt.

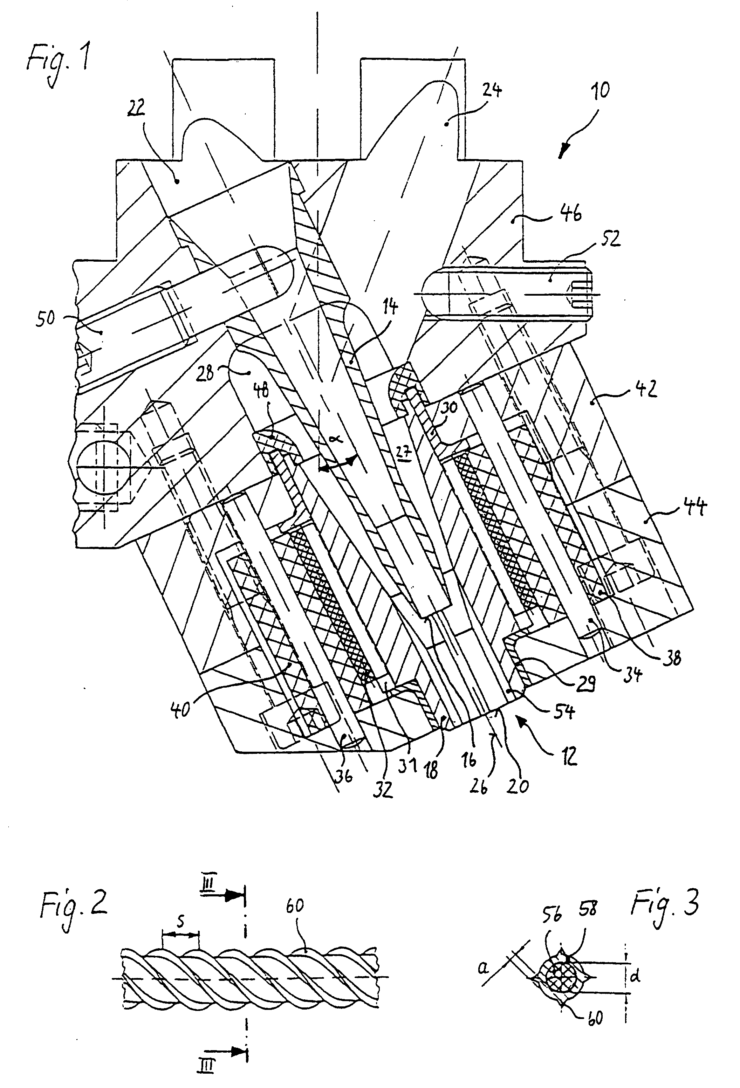

Fig.1 stellt ein erstes Ausführungsbeispiel eines Düsenträgers 10 mit einer Düsenanordnung 12 dar, die eine innere Düse 14 mit einer Mündung 16 und ein äußere Düse 18 mit einer Mündung 20 umfaßt.

Das der Mündung 16 entgegengesetzte Ende der inneren Düse 14 schließt sich an einen inneren Zuführkanal 22 an, durch den eine innere Masse oder Füllung einer herzustellenden Backware der inneren Düse 14 zuführbar ist. Zur äußeren Düse 18 führt ein äußerer Zuführkanal 24. Die innere Düse 14 und die äußere Düse 18 haben eine gemeinsame Achse 26; dabei umgibt die äußere Düse 18 die innere Düse in einem Abstand, so daß zwischen dem äußeren Zuführkanal 24 und der Mündung der inneren Düse 14 ein Ringkanal 27 gebildet ist. Der Ringkanal 27 ist mit dem äußeren Zuführkanal 24 durch einen radial aufgeweiteten Ringraum 28 verbunden. Durch den äußeren Zuführkanal 24 und diesen Ringraum 28 läßt sich eine äußere Masse unter Druck in die äußere Düse 18 einleiten.

Die Massen werden durch eine nicht dargestellte Einrichtung zum Mischen und Fördern der Masse zugeführt. Die Massen können eine Mischung für Backwaren, wie z.B. Mehl, Stärke, Eier und Zucker, eine Mischung für Süßwaren, wie z.B. Zucker, Süßstoff, Kakao und Fette, oder eine Fruchtfüllung sein. Die Massen werden durch anschließendes Backen oder Auskühlen zu Nahrungsmitteln.

Die äußere Düse 18 ist in zwei Gleitlagern 29 und 30 drehbar gelagert und axial festgehalten. An der äußeren Düse 18 ist eine Außenverzahnung 31 ausgebildet, über die sie von einem nicht dargestellten Motor über einen Zahnriemen 32 oder ein anderes Antriebs- oder Zugmittel antreibbar ist. Der Zahnriemen 32 ist durch auf je einem Bolzen 34 bzw. 36 gelagerte Rollen 38 und 40 abgestützt. Die Gleitlager 29 und 30 und die Bolzen 34 und 36 sind an Gehäuseteilen 42 und 44 befestigt, die mit einem Gehäuseteil 46 verschraubt sind. Somit bildet die äußere Düse 18 einen Rotor um die ortsfeste innere Düse 14, die zusammen mit den Gehäuseteilen 42, 44, 46 einen Stator bildet.

Die Schnittstelle zwischen der drehbaren äußeren Düse 18 und dem ortsfesten Gehäuseteil 46 am Ringkanal 28 ist durch eine Dichtung 48 abgedichtet, welche die äußere Düse 18 in Strömungsrichtung der äußeren Masse an deren Innenseite überlappt.

Der Ringkanal 28 und die Dichtung 48 weisen gerundete, im Längsschnitt kreis- oder ellipsenförmige Oberflächen auf, so daß die äußere Masse nahezu turbulenzfrei strömt. Die Strömungsquerschnitte des inneren Zuführkanals 22 und des äußeren Zuführkanals 24 sind durch je einen verstellbaren Bolzen 50 bzw. 52 verengbar.

Die Mündung 16 der inneren Düse 14 ist entgegen der Strömungsrichtung der Massen gegen die Mündung 20 der äußeren Düse 18 zurückversetzt. Die äußere Düse 18 ist kreiszylinderförmig und weist an der Innenseite Aussparungen 54 in Form von Längsnuten auf, von denen drei dargestellt sind.

Beim Extrudieren einer inneren und äußeren Masse durch den inneren Zuführkanal 22 bzw. den äußeren Zuführkanal 24 und den Ringkanal 28 sowie die Düsen 14 bzw. 18 wird die äußere Düse 18 über den Zahnriemen 32 in Drehung versetzt. Dabei strömen die Massen an der Mündung 16 zusammen. Auf dem Weg von der Mündung 16 zur Mündung 20 wird die innere Masse durch die äußere Masse mitgedreht und dabei komprimiert. Dadurch wird eine feste Bindung zwischen der inneren und der äußeren Masse erzielt.

Es entstehen Backwaren, die - wie in den Fig.2 bis 5 dargestellt - von einer zylinderförmigen Füllung aus innerer Masse 56 und eine diese umgebenden Ummantelung aus äußerer Masse 58 gebildet sind. Durch einen Teil der äußeren Masse, der durch die Aussparungen 54 gepreßt worden ist, sind am Umfang der Ummantelung wendelförmige Stege 60 ausgebildet, deren Form zu derjenigen der Nuten 54 komplementär ist.

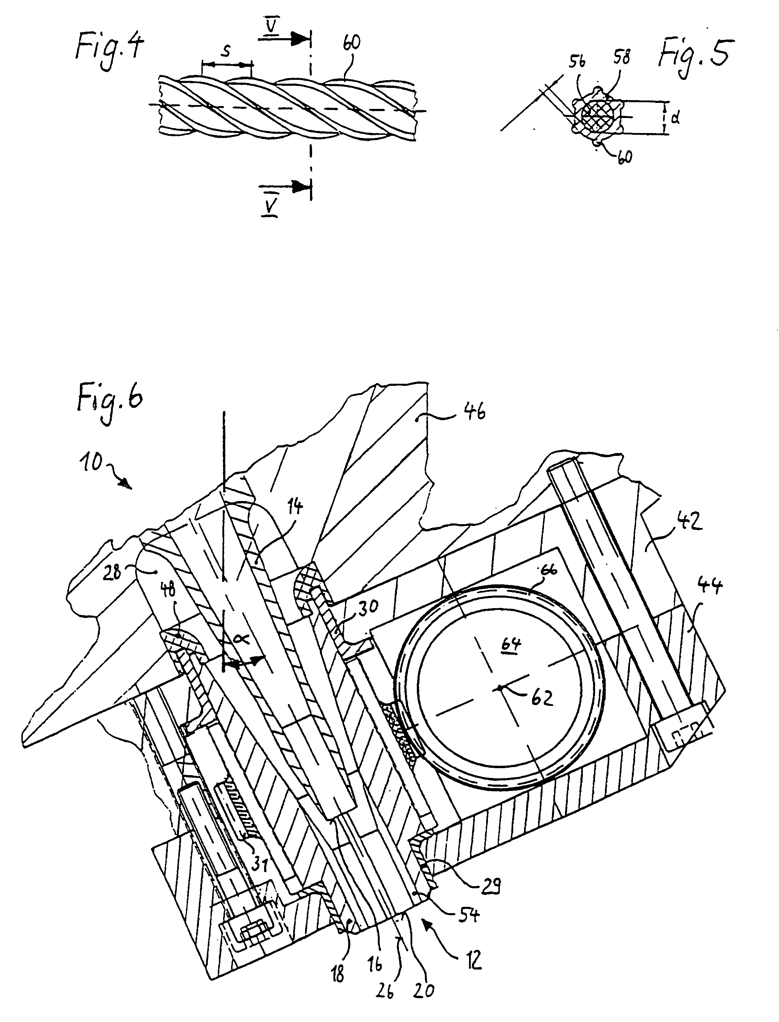

Beispielhaft sind in Fig.3 und Fig.5 Backwaren dargestellt, die mit vier im Querschnitt dreieckigen bzw. sechs im Querschnitt halbrunden Aussparungen hergestellt sind. Die Steigung der wendelförmigen Stege 60 ist von der Strömungsgeschwindigkeit der äußeren Masse 58 und der Drehgeschwindigkeit der äußeren Düse 18 abhängig. Typische Größenordnungen sind für den Durchmesser d des Querschnitts der inneren Masse 56 4mm bis 6mm und für die Schichtdicke a der Ummantelung aus äußerer Masse 58 1mm bis 1,8mm. Die Steigung s der wendelförmigen Stege 60 beträgt beispielsweise 6mm bis 12mm.

Alternativ können in die äußere Düse 18 auch beispielsweise verschiedenfarbige Massen zugeführt werden, so daß eine marmorisierte, gewendelte Backware entsteht.

In Fig. 6 ist eine zweite Ausführungsform der Düsenanordnung 10 dargestellt, bei welcher der Rotor mit der äußeren Düse 18 mittels eines Zahnradgetriebes mit sich kreuzenden Achsen 26 und 62 antreibbar ist. Hierzu ist in den Gehäuseteilen 42 und 44 eine Welle 64 drehbar gelagert, deren Achse 62 sich in einem Abstand zur Achse 26 rechtwinklig zu dieser erstreckt. Die Welle 62 weist eine Außenverzahnung 66 auf, die mit der Außenverzahnung 31 kämmt. Beispielsweise bilden beide Verzahnungen 31 und 66 ein Schraubenradpaar. Die Verzahnungen 31 und 66 können alternativ als Kegelradpaar oder Schneckenradsatz ausgebildet sein.

Bei den in Fig. 1 und 6 dargestellten Ausführungsformen können mehrere Düsenanordnungen 10 unmittelbar nebeneinander angeordnet sein. Die Achsen 26 der einzelnen Düsenanordnungen 10 sind dabei parallel zueinander angeordnet und die einzelnen Rotoren mittels eines gemeinsamen Zahnriemens 32 oder einer gemeinsamen Welle 64 antreibbar.

Durch die synchrone Drehung der Düsenanordnungen 10 entstehen beim Extrudieren mehrere gleichartig gewendelte Stränge, beispeilsweise bis zu dreißig Stränge gleichzeitig. Die Stränge werden mittels eines (nicht dargestellten) Förderbandes von den Düsenanordnungen 10 wegbewegt. Um dabei das Verformen des einzelnen Stranges beim Übergang auf das Transportband möglichst gering zu halten, ist die Düsenanordnung 10 insgesamt geneigt angeordnet, d.h. die Achse 26 der Düsen 14 und 18 ist in einem Winkel a von etwa 25° zur Vertikalen geneigt.

## Patentansprüche

1. Düsenanordnung zum Extrudieren teigiger Massen, mit einer ortsfesten inneren Düse (14) mit einer Achse (26) und einer Mündung (16) zum Extrudieren einer inneren Masse (56) und mindestens einer äußeren Düse (18) mit einer Mündung (20) zum Extrudieren einer äußeren Masse (58), wobei die äußere Düse (18) relativ zur inneren Düse (14) um deren Achse (26) drehbar ist,
**dadurch gekennzeichnet, daß** die Mündung (20) der äußeren Düse (18) in Strömungsrichtung hinter der Mündung (16) der inneren Düse (14) angeordnet ist, so daß die Massen (56, 58) an der Mündung (16) der inneren Düse (14) zusammenströmen, und die äußere Düse (18) an ihrer Innenseite derart gestaltet ist, daß auf dem Weg zur Mündung (20) der äußeren Düse (18) die innere Masse (56) durch die äußere Masse (58) mitgedreht und dabei komprimiert wird.

2. Düsenanordnung nach Anspruch 1,
**dadurch gekennzeichnet, daß** die äußere Düse (18) an ihrer Mündung (20) im wesentlichen kreisförmig ist und an ihrer Innenwand mindestens eine im wesentlichen längsgerichtete Aussparung (54) zum Erzeugen eines wendelförmigen Steges (60) aus der äußeren Masse (58) aufweist.

3. Düsenträger (10) zum Extrudieren teigiger Massen mit einem Stator, der eine innere Düse (14) mit einer Mündung (16) zum Extrudieren einer inneren Masse (56) trägt, und in dem ein innerer Zuführkanal (22) zur inneren Düse (14) und ein äußerer Zuführkanal (24) ausgebildet ist, sowie einem Rotor, der eine äußere Düse (18) mit einer Mündung (20) zum Extrudieren einer äußeren Masse (58) aufweist und im Stator drehbar gelagert ist, wobei im Stator und/oder Rotor ein Ringraum (28) ausgebildet ist, der den äußeren Zuführkanal (24) mit der äußeren Düse (18) verbindet,
**dadurch gekennzeichnet, daß** die Mündung (20) der äußeren Düse (18) in Strömungsrichtung hinter der Mündung (16) der inneren Düse (14) angeordnet ist, so daß die Massen (56, 58) an der Mündung (16) der inneren Düse (14) zusammenströmen, und die äußere Düse (18) an ihrer Innenseite derart gestaltet ist, daß auf dem Weg zur Mündung (20) der äußeren Düse (18) die innere Masse (56) durch die äußere Masse (58) mitgedreht und dabei komprimiert wird.

4. Düsenträger nach Anspruch 3,
**dadurch gekennzeichnet, daß** die äußere Düse (18) aus dem Rotor einstückig ausgebildet ist.

5. Düsenträger nach Anspruch 3 oder 4,
**dadurch gekennzeichnet, daß** der Rotor gegenüber dem Stator durch eine Dichtung (48) abgedichtet ist, die den Rotor innen in Strömungsrichtung der äußeren Masse (58) überlappt.

6. Vorrichtung zum Extrudieren teigiger Massen,
**dadurch gekennzeichnet, daß** sie einen Düsenträger nach einem der Ansprüche 3 bis 5 aufweist und der Rotor durch ein Zugmittelgetriebe, insbesondere einen Zahnriementrieb (31, 32), oder ein Zahnradgetriebe (31, 64, 66) mit sich kreuzenden und dabei voneinander beabstandeten Achsen (26, 62) antreibbar ist.

7. Vorrichtung nach Anspruch 6,
**dadurch gekennzeichnet, daß** mehrere Düsenträger (10) nebeneinander angeordnet und durch ein einziges Zugmittelgetriebe, insbesondere einen Zahnriementrieb (31, 32), oder ein einziges Zahnradgetriebe (31, 64, 66) mit sich kreuzenden und dabei voneinander beabstandeten Achsen (26, 62) antreibbar sind.

8. Vorrichtung nach Anspruch 6 oder 7,
**dadurch gekennzeichnet, daß** der/die Düsenträger (10) in einem Winkel α von etwa 25° zur Vertikalen geneigt angeordnet ist/sind.

## Claims

1. A nozzle arrangement for extruding dough materials, comprising a stationary inner nozzle (14) with an axis (26) and a mouth (16) for extruding an inner material (56) and at least one outer nozzle (18) with a mouth (20) for extruding an outer material (58), the outer nozzle (18) being rotatable relative to the inner nozzle (14) about the axis (26) of the latter,
**characterised in that** the mouth (20) of the outer nozzle (18) is arranged behind the mouth (16) of the inner nozzle (14) in the direction of flow so that the materials (56, 58) flow together at the mouth (16) of the inner nozzle (14), and the outer nozzle (18) is constructed on its inside in such a manner that, on the path to the mouth (20) of the outer nozzle (18), the inner material (56) is set in rotation by the outer material (58) and is thereby compressed.

2. The nozzle arrangement according to claim 1, **characterised in that** the outer nozzle (18) is substantially circular at its mouth (20) and on its inner wall comprises at least one substantially longitudinally oriented recess (54) for producing a coiled web (60) of the outer material (58).

3. A nozzle holder (10) for extruding dough materials, comprising a stator which supports an inner nozzle (14) with a mouth (16) for extruding an inner material (56) and in which an inner feed duct (22) leading to the inner nozzle (14) and an outer feed duct (24) are designed, and comprising a rotor, that includes an outer nozzle (18) with a mouth (20) for extruding an outer material (58) and is rotatably supported in the stator, an annular chamber (28) being formed in the stator and/or the rotor connecting the outer feed duct (24) with the outer nozzle (18),
**characterised in that** the mouth (20) of the outer nozzle (18) is arranged behind the mouth (16) of the inner nozzle (14) in the direction of flow so that the materials (56, 58) flow together at the mouth (16) of the inner nozzle (14), and the outer nozzle (18) is constructed on its inside in such a manner that, on the path to the mouth (20) of the outer nozzle (18), the inner material (56) is set in rotation by the outer material (58) and is thereby compressed.

4. The nozzle holder according to claim 3,
**characterised in that** the outer nozzle (18) is integrally formed from the rotor.

5. The nozzle holder according to claim 3 or 4, **characterised in that** the rotor is sealed relative to the stator by a seal (48) overlapping the rotor on the inside in the direction of flow of the outer material (58).

6. A device for extruding dough materials,
**characterised in that** it comprises a nozzle holder according to one of claims 3 to 5 and the rotor is adapted to be driven by a traction gearing, in particular a toothed belt drive (31, 32) or a toothed wheel gearing (31, 64, 66) with crossing axes (26, 62) spaced apart from one another.

7. The device according to claim 6,
**characterised in that** a plurality of nozzle holders (10) are arranged adjacent one another and are adapted to be driven by a single traction gearing, in particular a toothed belt drive (31, 32) or a single toothed wheel gearing (31, 64, 66) with crossing axes (26, 62) spaced apart from one another.

8. The device according to claim 6 or 7,
**characterised in that** the nozzle holder(s) (10) is/are arranged inclined at an angle α of approximately 25° relative to the vertical.

## Revendications

1. Ensemble à filière pour extruder des matières sous forme de pâte, comportant une filière intérieure stationnaire (14) avec un axe (26) et une embouchure (16) pour extruder une pâte intérieure (56), et au moins une filière extérieure (18) avec une embouchure (20) pour extruder une pâte extérieure (58), la filière extérieure (18) étant mobile en rotation par rapport à la filière intérieure (14) autour de son axe (26), **caractérisé en ce que** l'embouchure (20) de la filière extérieure (18) est agencée en arrière de l'embouchure (16) de la filière intérieure (14) dans la direction d'écoulement, de telle sorte que les pâtes (56, 58) confluent au niveau de l'embouchure (16) de la filière intérieure (14), et sur son côté intérieur la filière extérieure (18) est configurée de telle sorte que sur le chemin vers l'embouchure (20) de la filière extérieure (18), la pâte intérieure (56) est entraînée en rotation par la pâte extérieure (58) et est ainsi comprimée.

2. Ensemble à filière selon la revendication 1, **caractérisé en ce qu'**au niveau de son embouchure (20) la filière extérieure (18) est sensiblement circulaire et sur sa paroi intérieure elle présente au moins une échancrure (54) dirigée sensiblement longitudinalement pour générer une barrette hélicoïdale (60) constituée de pâte extérieure (58).

3. Porte-filière (10) pour extruder des matières sous forme de pâte, comportant un stator qui porte une filière intérieure (14) avec une embouchure (16) pour extruder une pâte intérieure (56) et dans lequel sont réalisés un canal d'alimentation intérieur (22) vers la filière intérieure (14) et un canal d'alimentation extérieur (24), ainsi qu'un rotor qui comprend une filière extérieure (18) avec une embouchure (20) pour extruder une pâte extérieure (58) et qui est monté mobile en rotation dans le stator, une chambre annulaire (28) étant formée dans le stator et/ou dans le rotor, qui relie le canal d'alimentation extérieur (24) à la filière extérieure (18),
**caractérisé en ce que** l'embouchure (20) de la filière extérieure (18) est agencée en arrière de l'embouchure (16) de la filière intérieure (14) en direction d'écoulement, de telle sorte que les pâtes (56, 58) confluent au niveau de l'embouchure (16) de la filière intérieure (14), et sur son côté intérieur la filière extérieure (18) est configurée de telle sorte que sur le chemin vers l'embouchure (20) de la filière extérieure (18), la pâte intérieure (56) est entraînée en rotation par la pâte extérieure (58) et est ainsi comprimée.

4. Porte-filière selon la revendication 3, **caractérisé en ce que** la filière extérieure (18) est réalisée d'un seul tenant à partir du rotor.

5. Porte-filière selon l'une ou l'autre des revendications 3 et 4, **caractérisé en ce que** le rotor est étanché par rapport au stator par un joint (48) qui recouvre le rotor à l'intérieur en direction d'écoulement de la pâte extérieure (58).

6. Dispositif pour extruder des matières en forme de pâte, **caractérisé en ce qu'**il comprend un porte-filière selon l'une des revendications 3 à 5, et **en ce que** le rotor est susceptible d'être entraîné par une transmission à organe de traction, en particulier par un entraînement à courroie dentée (31, 32) ou par une transmission à engrenages (31, 64, 66) dont les axes (26, 62) se croisent et sont écartés l'un de l'autre.

7. Dispositif selon la revendication 6, **caractérisé en ce que** plusieurs porte-filières (10) sont agencés les uns à côté des autres et sont susceptibles d'être entraînés par une seule transmission à organe de traction, en particulier par un entraînement à courroie dentée (31, 32), ou par une seule transmission à engrenages (31, 64, 66) dont les axes (26, 62) se croisent et sont écartés l'un de l'autre.

8. Dispositif selon l'une ou l'autre des revendications 6 et 7, **caractérisé en ce que** le ou les porte-filière(s) (10) est/sont agencé(s) incliné(s) sous un angle α d'environ 25° par rapport à la verticale.
